# EUROPÄISCHE PATENTSCHRIFT

(11) **EP 3 347 221 B1**
(45) Veröffentlichungstag und Bekanntmachung des Hinweises auf die Patenterteilung: **31.03.2021**
(21) Anmeldenummer: 16751267.2
(22) Anmeldetag: 05.08.2016
(51) Int. Cl.: B60J 7/02, B60J 7/057, B60J 7/043, B60J 7/053

(54) **ANORDNUNG FÜR EIN BEWEGBARES DACHELEMENT FÜR EIN KRAFTFAHRZEUG UND SYSTEM FÜR EIN KRAFTFAHRZEUG**
ARRANGEMENT FOR A SUNROOF FOR A VEHICLE AND SYSTEM FOR A VEHICLE
DISPOSITIF DE TOÎT MOBILE POUR UN VÉHICULE ET SYSTÈME POUR UN VÉHICULE AUTOMOBILE

(30) Priorität: 10.09.2015 DE 102015115285
(43) Veröffentlichungstag der Anmeldung: 18.07.2018
(73) Patentinhaber: Webasto SE, 82131 Stockdorf (DE)
(72) Erfinder: HÖLZEL, Dominik, 82140 Olching (DE)
(74) Vertreter: Epping - Hermann - Fischer
(86) Internationale Anmeldenummer: PCT/EP2016/068789
(87) Internationale Veröffentlichungsnummer: WO 2017/041970

(56) Entgegenhaltungen:
- EP-A1- 0 899 140
- EP-A1- 1 905 631
- EP-A1- 2 636 553
- WO-A1-2007/079741
- DE-A1-102007 001 286
- JP-A- H07 285 342

## Beschreibung

Die Erfindung betrifft eine Anordnung für ein bewegbares Dachelement für ein Kraftfahrzeug, insbesondere für einen Deckel, der eine Dachöffnung verschließen kann. Die Erfindung betrifft weiterhin ein System für ein bewegbares Dachelement für ein Kraftfahrzeug, das eine derartige Anordnung aufweist.

Dächer von Kraftfahrzeugen können mit einem Schiebedach versehen sein. Ein Dachelement, auch Deckel genannt, kann dabei eine Dachöffnung entweder in einer Schließstellung des Deckels verschließen oder in weiteren Stellungen mindestens teilweise freigeben. Zum Steuern der Bewegung des Dachelements ist eine Ausstellmechanik vorgesehen. Die Ausstellmechanik ist zum einen mit dem Dachelement gekoppelt und zum anderen mit einem Schlitten. Der Schlitten ist in einer Schiene geführt, die im Fahrzeugdach angeordnet ist.

Bei einem Unfall, insbesondere bei einem Frontalunfall also einer Kollision mit einem Hindernis in Fahrtrichtung, ist es möglich, dass das Dachelement so stark beschleunigt wird, dass die Kopplung zwischen dem Dachelement und der Führungsschiene zu schwach ist, um das Dachelement zu halten. Das Dachelement kann sich somit vom Fahrzeugdach lösen. Zur Vermeidung einer derartigen Beschleunigung des Dachelements sind Sicherheitsbremsvorrichtungen bekannt, beispielsweise aus der EP 1 905 631 A1. Diese Sicherheitsbremsvorrichtungen sind am Schlitten angebracht und verklemmen den Schlitten mit der Schiene bei einer abrupten Beschleunigung des Dachelements.

Die DE 10 2007 001 286 A1 beschreibt einen Antriebsschlitten für ein Dachelement eines Fahrzeugs, an den ein Antriebskabel angespritzt ist.

Die EP 899 140 A1 bezieht sich auf Verbindungsteile, die zum Kuppeln eines Deckels mit einem Betätigungsmechanismus dienen.

Die WO 2007/079741 A1 bezieht sich auf eine Anbindungsvorrichtung für zumindest ein Führungsrohr an zumindest eine Führungsschiene, wobei die Anbindungsvorrichtung als Umspritzung im Bereich zumindest eines Endes des Führungsrohres ausgebildet ist.

Es ist wünschenswert, eine Anordnung für ein bewegbares Dachelement sowie ein System für ein bewegbares Dachelement anzugeben, die beziehungsweise das eine verlässliche Kopplung des Dachelements an einer Schiene ermöglicht, insbesondere auch bei einem Unfall. Beispielsweise ist es wünschenswert, eine zuverlässige Kopplung alternativ oder zusätzlich zu einer Sicherheitsbremsvorrichtung zu ermöglichen.

Gemäß einem Beispiel weist eine Anordnung für ein bewegbares Dachelement für ein Kraftfahrzeug einen Schlitten auf. Der Schlitten ist ausgebildet, in einer Schiene geführt zu werden und relativ zu der Schiene bewegt zu werden. Der Schlitten weist eine erste Komponente und eine zweite Komponente auf. Die Anordnung weist ein Antriebskabel auf. Die zweite Komponente umgibt die erste Komponente und das Antriebskabel zumindest teilweise, um eine Kopplung zwischen dem Antriebskabel und dem Schlitten auszubilden. Beispielsweise weist die Kopplung eine Aufrauung der ersten Komponente auf, um eine kraftschlüssige und/oder stoffschlüssige Verbindung zwischen der ersten und der zweiten Komponente auszubilden. Insbesondere ist die Aufrauung durch Laser erzeugt, beispielsweise durch Einwirken eines Laserstrahls auf die erste Komponente.

Die erste Komponente weist die Aufrauung auf, die insbesondere in einem Bereich des Antriebskabels vorgesehen ist. Eine Oberfläche der ersten Komponente ist aufgeraut. Somit sind die erste Komponente und die zweite Komponente kraftschlüssig beziehungsweise stoffschlüssig miteinander verbunden, beispielsweise ähnlich einem Kleben. Somit ist die Gefahr eines Ablösens der zweiten Komponente von der ersten Komponente reduziert. Somit können höhere Kräfte von der ersten Komponente auf die zweite Komponente und damit auf das Antriebskabel übertragen werden als ohne die Aufrauung. Bei einem Unfall ist es somit möglich, die Beschleunigung des Dachelements mittels der Kopplung des Dachelements mit dem Schlitten und der Kopplung des Schlittens mit dem Antriebskabel ausreichend abzubremsen, um ein Entkoppeln des Dachelements vom Fahrzeug zu vermeiden. Das Antriebskabel wird als Bremse für das Dachelement verwendet. Durch die Aufrauung der zweiten Komponente ist die Kopplung zwischen dem Schlitten und dem Antriebskabel stabil genug, um die hierbei anfallenden Kräfte aufzunehmen.

Gemäß einem ersten Aspekt der Erfindung weist eine Anordnung für ein bewegbares Dachelement für ein Kraftfahrzeug einen Schlitten auf, der ausgebildet ist, in einer Schiene geführt zu werden und relativ zu der Schiene bewegt zu werden. Der Schlitten weist eine erste Komponente und eine zweite Komponente auf. Die Anordnung weist ein Antriebskabel auf. Die zweite Komponente umgibt die erste Komponente und das Antriebskabel zumindest teilweise, um eine Kopplung zwischen dem Antriebskabel und dem Schlitten auszubilden. Die Kopplung weist gemäß dem zweiten Aspekt eine Ausnehmung der ersten Komponente auf. In der Ausnehmung ist ein Material der zweiten Komponente angeordnet. Die Kopplung weist einen Haltekopf auf, der mittels der zweiten Komponente auf einer dem Antriebskabel abgewandten Seite in einem Bereich der Ausnehmung ausgebildet ist. Die zweite Komponente ist aus einem Kunststoff gebildet. Beispielsweise ist die Kopplung durch ein Umspritzen des Antriebskabels und der ersten Komponente mit dem Kunststoff ausgebildet. Somit ist eine stoffschlüssige Verbindung zwischen dem Schlitten und dem Antriebskabel realisiert. Auf eine Steckverbindung zwischen dem Schlitten und dem Antriebskabel kann verzichtet werden.

Mittels der Ausnehmung in der zweiten Komponente ist es möglich, das Material der zweiten Komponente so an der ersten Komponente anzuordnen, dass sich auf der dem Antriebskabel abgewandten Seite der Haltekopf ausbildet. Beginnend beim Haltekopf erstreckt sich die zweite Komponente durch die Ausnehmung bis zum Antriebskabel und umgibt das Antriebskabel. Der Haltekopf ist breiter ausgebildet als die Ausnehmung und hält somit das Antriebskabel an der ersten Komponente ähnlich einem Schweißdom beziehungsweise einem Kunststoffniet. Somit ist das Antriebskabel mittels der Kopplung ausreichend stark an dem Schlitten befestigt, um bei einem Unfall die auftretenden Kräfte aufzunehmen. Die Kopplung zwischen dem Antriebskabel und dem Schlitten ist stabil genug, damit das Antriebskabel die Beschleunigung des Dachelements bei einem Unfall abbremst. Ein Ablösen des Antriebskabels vom Schlitten ist durch den Haltekopf, der aus der zweiten Komponente gebildet ist, und dem Anordnen der zweiten Komponente in der Ausnehmung, vermeidbar. Die Kopplung ist ausreichend stark, um die Kräfte vom Dachelement verlässlich auf das Antriebskabel zu übertragen. Das Antriebskabel wird als Bremse für das Dachelement verwendet.

Mittels der Kopplung gemäß dem ersten Aspekt und der Kopplung gemäß dem zweiten Aspekt sind das Antriebskabel und der Schlitten jeweils ausreichend fest miteinander verbunden, um bei einem Unfall ein Ablösen des Schlittens von dem Antriebskabel zu vermeiden. Die Kopplung gemäß dem ersten Aspekt und die Kopplung gemäß dem zweiten Aspekt sind jeweils ausreichend stabil, um die Kräfte auszuhalten und zu übertragen, die bei einem Unfall auf die Kopplung wirken. Durch die Kopplung gemäß dem ersten Aspekt und die Kopplung gemäß dem zweiten Aspekt sind jeweils verlässliche Verbindungen zwischen dem Antriebskabel und dem Schlitten realisiert, die alternativ oder zusätzlich zu einer Sicherheitsbremsvorrichtung eine unkontrollierte Beschleunigung des Dachelements vermeiden.

Weitere Ausführungsformen umfassen eine Kombination des ersten Aspekts mit dem zweiten Aspekt. Die Kopplung weist somit die Ausnehmung der ersten Komponente und den Haltekopf auf. Weiterhin weist die Kopplung die Aufrauung der ersten Komponente auf, um eine kraftschlüssige und/oder stoffschlüssige Verbindung zwischen der ersten und der zweiten Komponente auszubilden. Somit ist es möglich, höhere Kräfte zwischen dem Antriebskabel und dem Schlitten zu übertragen, als bei dem ersten Aspekt und dem zweiten Aspekt jeweils allein.

Gemäß weiteren Ausführungsformen weist die Kopplung ein Halteelement auf. Das Halteelement ist mit dem Antriebskabel verbunden. Das Halteelement erstreckt sich ausgehend von dem Antriebskabel durch die Ausnehmung. Insbesondere bildet das Halteelement eine formschlüssige Verbindung mit der zweiten Komponente aus. Das Halteelement ist insbesondere entlang des Antriebskabels länglich ausgedehnt. Somit ist es möglich, mittels des Halteelements eine Rotation beziehungsweise ein Durchbiegen des Schlittens beziehungsweise der zweiten Komponente zu vermindern oder zu verhindern. Dadurch ist es möglich, ein Ablösen der zweiten Komponente von der ersten Komponente zu vermeiden, das durch die Rotation verursacht wurde. Die Kopplung zwischen dem Schlitten und dem Antriebskabel kann dadurch hohe Kräfte übertragen.

Gemäß weiteren Ausführungsformen weist das Halteelement einen vorspringenden Bereich auf, der auf der dem Antriebskabel abgewandten Seite über die erste Komponente vorspringt. Somit ist es möglich, dass das Halteelement die erste Komponente hinterhakt. Dadurch wird vermieden, dass sich das Halteelement ungewünscht aus der Ausnehmung entfernt.

Gemäß weiteren Ausführungsformen ist das Halteelement aus einem Metall gebildet, insbesondere ein Blechteil. Das Halteelement ist insbesondere an das Antriebskabel mittels einer plastischen Verformung des Halteelements angebracht. Beispielsweise ist das Halteelement an das Antriebskabel angecrimpt.

Die erste Komponente ist aus einem Metall gebildet, beispielsweise Stahl. Die zweite Komponente ist aus einem Kunststoff gebildet. Beispielsweise ist die Kopplung durch ein Umspritzen des Antriebskabels und der ersten Komponente mit dem Kunststoff ausgebildet. Somit ist eine stoffschlüssige Verbindung zwischen dem Schlitten und dem Antriebskabel realisiert. Auf eine Steckverbindung zwischen dem Schlitten und dem Antriebskabel kann verzichtet werden.

Gemäß einem zweiten Aspekt der Erfindung weist ein System für ein bewegbares Dachelement für ein Kraftfahrzeug eine Anordnung gemäß einer Ausführungsform wie oben beschrieben auf. Das System weist die Schiene auf. Die Schiene weist einen Führungskanal auf. Der Schlitten ist in dem Führungskanal führbar. Der Schlitten weist einen vorgegebenen Querschnitt auf. Der Querschnitt ist so vorgegeben, dass der Schlitten in dem Führungskanal unabhängig von der Art der Kopplung führbar ist. Die Schiene weist denselben Querschnitt auf, unabhängig davon, ob die Kopplung gemäß dem oben beschriebenen Beispiel oder gemäß dem ersten Aspekt der Erfindung oder einer Kombination oder Weiterbildung ausgebildet ist. Das System ist somit modular im gleichen Bauraum gemäß dem ersten Aspekt oder dem zweiten Aspekt oder der Kombination ausbildbar. Insbesondere ist der Bauraumbedarf gleich zu den herkömmlichen Systemen.

Weitere Vorteile, Merkmale und Weiterbildungen ergeben sich aus den nachfolgenden, in Verbindung mit den Figuren erläuterten Beispielen.

Es zeigen:
- Figur 1: eine schematische Darstellung einer Ausführungsform eines Fahrzeugs,
- Figur 2: eine schematische Darstellung einer Ausführungsform einer Anordnung,
- Figur 3: eine schematische Darstellung eines Querschnitts einer Ausführungsform eines Systems,
- Figur 4: eine schematische Darstellung einer Ausführungsform einer Anordnung,
- Figur 5: eine schematische Darstellung einer Ausführungsform einer Anordnung,
- Figur 6: eine schematische Darstellung einer Ausführungsform einer Anordnung, und
- Figur 7: eine schematische Darstellung einer Ausführungsform einer Anordnung.

In den Ausführungsbeispielen und Figuren können gleiche, gleichartige oder gleich wirkende Elemente jeweils mit denselben Bezugszeichen versehen sein.

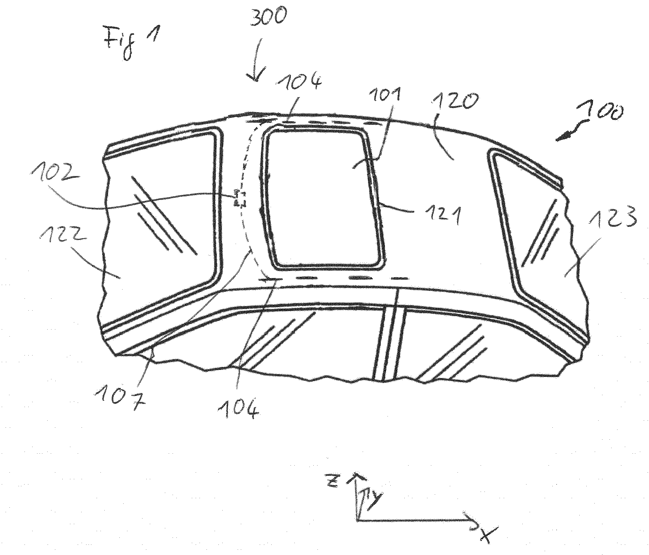

Figur 1 zeigt einen Ausschnitt eines Kraftfahrzeugs 100. Das Kraftfahrzeug 100 weist ein Fahrzeugdach 120 auf. In normaler Betriebsposition vorne ist eine Frontscheibe 122 angeordnet. In X-Richtung hinten ist eine Heckscheibe 123 angeordnet. Das Fahrzeugdach 120 erstreckt sich insbesondere zwischen der Frontscheibe 122 und der Heckscheibe 123. Das Fahrzeugdach 120 weist eine Dachöffnung 121 auf. Die Dachöffnung 121 ist durch ein Dachelement 101 verschließbar. Durch eine Bewegung des Dachelements 101 relativ zum übrigen Fahrzeugdach 120 ist die Dachöffnung 121 zumindest teilweise freigebbar. Das Dachelement 101 ist beispielsweise Teil eines Panoramadachs, eines Spoilerdachs, eines Schiebedachs, beispielsweise eines außen geführten Schiebedachs, und/oder eines Schiebehebedachs, eines von oben montierbaren Daches (Topload) oder eines von unten montierbaren Daches (Bottomload). Das Dachelement 101 wird auch Deckel genannt und ist beispielsweise aus Glas oder einem transparenten Kunststoff.

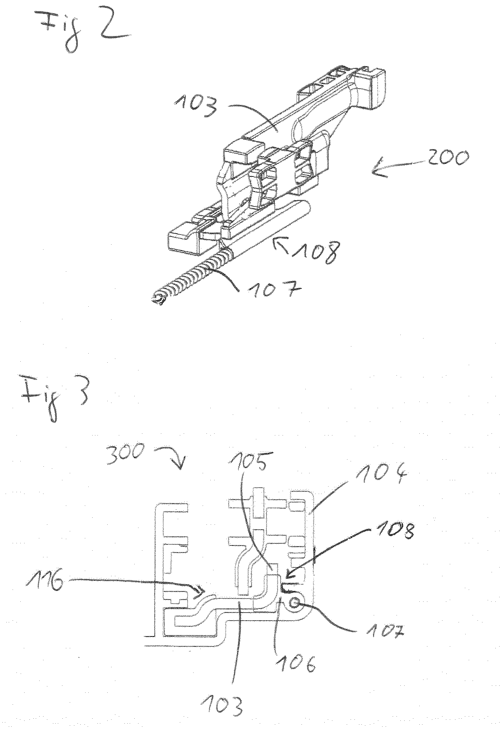

Das Dachelement 101 ist mit einer Ausstellmechanik (nicht explizit gezeigt). Die Ausstellmechanik ist wiederum mit einem Schlitten 103 (Figuren 2 bis 6) gekoppelt. Der Schlitten 103 ist Teil eines Systems 300. Das System 300 weist eine Schiene 104 auf, die mit dem Fahrzeugdach 120 gekoppelt ist. Zudem ist ein Antriebskabel 107 vorgesehen, das in der Führungsschiene 104 zumindest teilweise geführt ist, und mit dem Schlitten 103 verbunden ist. Das Antriebskabel und der Schlitten 103 weisen eine gemeinsame Umspritzung auf. Das System 300 weist in Y-Richtung der Figur 1 beidseitig des Dachelements 101 die Führungsschiene 104, das Antriebskabel 107 sowie den Schlitten 103 auf. Diese sind beidseitig jeweils korrespondierend zueinander ausgebildet, sodass im Folgenden nur eine Seite des Systems 300 erläutert wird. Die Erläuterungen gelten genauso für die andere Seite des Systems 300.

Ein Motor 102 ist vorgesehen, insbesondere ein Elektromotor, um das Antriebskabel 107 relativ zu der Führungsschiene 103 zu bewegen. Der Elektromotor 102 kann auch der der Frontscheibe 122 zugewandten Seite der Dachöffnung 121 angeordnet sein, wie in der Figur 1 dargestellt. Der Motor 102 ist gemäß weiteren Ausführungsbeispielen an einer anderen Position angeordnet, beispielsweise auf einer der Heckscheibe 123 zugewandten Seite der Dachöffnung 121.

Figur 2 zeigt eine Anordnung 200, die den Schlitten 103 und das Antriebskabel 107 aufweist. Das Antriebskabel 107 ist mittels einer Kopplung mit dem Schlitten 103 verbunden. Insbesondere ist das Antriebskabel 107 an dem Schlitten angespritzt, sodass das Antriebskabel 107 und der Schlitten 103 einstückig ausgebildet sind.

Das Antriebskabel 107 ist ausgebildet, sowohl Zug- als auch Schubkräfte auf dem Schlitten 103 zu übertragen. Insbesondere ist das Antriebskabel 107 drucksteif ausgelegt. Gemäß weiteren Ausführungsformen sind zwei oder mehr Antriebskabel vorgesehen. Das Antriebskabel 107 weist eine helixförmige Außenseite auf, um eine Antriebskraft eines Zahnrads des Motors 120 auf den Schlitten 103 zu übertragen.

Figur 3 zeigt eine Ausführungsform des Systems 300. Der Schlitten 103 ist in einem Führungskanal 116 der Schiene 104 geführt.

Der Schlitten 103 weist eine erste Komponente 105 auf. Die erste Komponente 105 ist aus einem Metall, beispielsweise aus Stahl, gebildet. Der Schlitten 103 weist eine zweite Komponente 106 auf. Die zweite Komponente 106 ist aus einem Kunststoff gebildet und beispielsweise mittels einem Umspritzverfahren auf die erste Komponente 105 aufgebracht. Das Antriebskabel 107 ist ebenfalls mittels der zweiten Komponente 106 an die erste Komponente 105 angespritzt. Die zweite Komponente 106 verbindet somit das Antriebskabel 107 mit dem Schlitten 103, insbesondere mit der ersten Komponente 105 des Schlittens 103.

Eine Kopplung 108 ist ausgebildet, um das Antriebskabel 107 mittels des Schlittens 103 mit dem Dachelement 101 zu koppeln. Die Kopplung 108 ist stabil genug ausgebildet, um auch bei Kräften stabil bestehen zu bleiben, die bei einem Unfall, insbesondere einem Frontalunfall, das Dachelement in negativer X-Richtung in Richtung der Frontscheibe 122 beschleunigen. Die Kopplung 108 ist so ausgebildet, dass eine Trennung zwischen dem Antriebskabel 107 und dem Schlitten 103 vermieden wird. Insbesondere wird ein Ablösen der zweiten Komponente 106 von der ersten Komponente 105 im Bereich der Kopplung 108 zwischen dem Antriebskabel 107 und der ersten Komponente 105 vermieden.

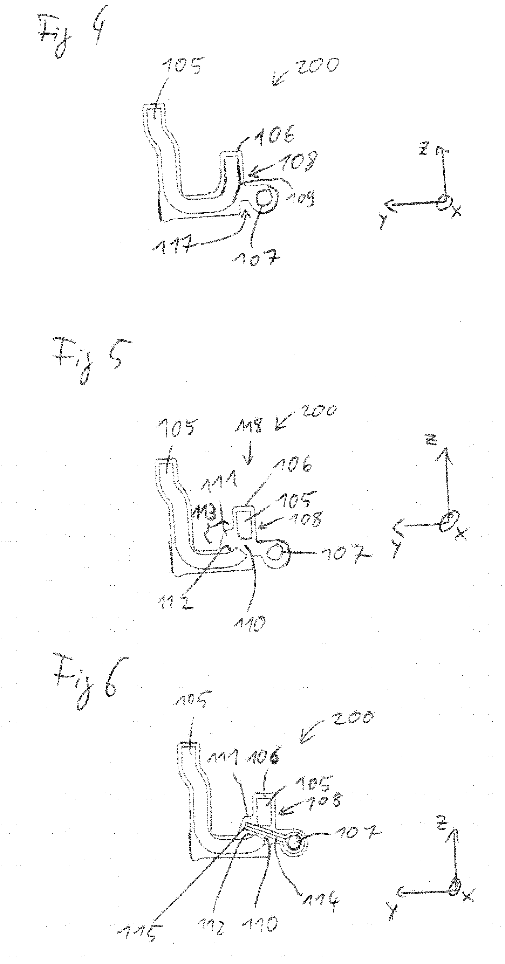

Figur 4 zeigt die Anordnung 200 mit der Kopplung 108 gemäß einem ersten Aspekt. Die Kopplung 108 weist eine Aufrauung 109 der ersten Komponente 105 auf. Die Aufrauung 109 ist zumindest auf einer dem Antriebskabel 107 zugewandten Seite 117 der ersten Komponente 105 eingebracht. Beispielsweise ist die erste Komponente 105 durch ein Einwirken eines Laserstrahls aufgeraut. Auch andere Verfahren zur Aufrauung der Oberfläche der ersten Komponente 105 sind möglich, beispielsweise eine mechanische Behandlung zum Ausbilden der Aufrauung 109.

Mittels der Aufrauung 109 der Oberfläche des Stahls der ersten Komponente 105 ist eine kraftschlüssige Verbindung der zweiten Komponente 106 mit der ersten Komponente 105 zumindest im Bereich der Aufrauung 109 realisiert. Aufgrund der Aufrauung 109 ist an der Oberfläche der ersten Komponente 105 eine Mikrostruktur ausgebildet, in der es möglich ist, dass die zweite Komponente 106 Hinterschneidungen mit der Mikrostruktur ausbildet. Somit ist eine Verbindung der ersten Komponente 105 mit der zweiten Komponente 106 im Bereich der Aufrauung 109 ähnlich einem Kleben möglich. Die Aufrauung 109 ermöglicht eine kraftschlüssige und/oder formschlüssige Verbindung der ersten Komponente 105 mit der zweiten Komponente 106, die höhere Kräfte zwischen der ersten Komponente 105 und dem Antriebskabel 107 übertragen kann, als wenn die zweite Komponente 106 nur auf einer relativ glatten Oberfläche der ersten Komponente 105 aufliegt. Ein Ablösen der zweiten Komponente 106 von der ersten Komponente 105 wird somit vermieden. Somit ist die Kopplung 108 des Antriebskabels 107 mit dem Schlitten 103 stabil genug ausgebildet, um auch bei einem Unfall verlässlich zu halten. Somit ist es möglich, das Antriebskabel 107 als Bremse für den Schlitten 103 und damit für das Dachelement 101 zu verwenden.

Figur 5 zeigt die Anordnung 200 gemäß einer weiteren Ausführungsform. Die Kopplung 108 weist eine Ausnehmung 110 auf. Die Ausnehmung 110 ist in einem dem Antriebskabel 107 zugewandten Bereich 118 der ersten Komponente 105 ausgebildet. Die Ausnehmung 110 ist nach Art eines Langlochs ausgebildet und erstreckt sich über einen Teil der ersten Komponente 105 in X-Richtung. Die Ausnehmung 110 ist so ausgebildet, dass sie den Bereich 118 in Y-Richtung durchbricht.

In der Ausnehmung 110 ist Kunststoff der zweiten Komponente 106 angeordnet. Zudem ist auf einer dem Antriebskabel 107 abgewandten Seite 112 der ersten Komponente 105 ein Haltekopf 111 ausgebildet. Der Haltekopf 111 ist aus Kunststoff der zweiten Komponente 106 gebildet.

Der Haltekopf ist in einem Bereich 113 an der Ausnehmung 110 angeordnet. Der Kunststoff der zweiten Komponente 106 erstreckt sich vom Antriebskabel 107 durch die Ausnehmung 110 und bildet auf der Seite 112 den Haltekopf 11 aus. Der Haltekopf 111 weist insbesondere einen größeren Querschnitt auf als die Ausnehmung 110. Somit ist mittels des Haltekopfs 111 und des Materials in der Ausnehmung 110 eine Art Kunststoffniet gebildet, der das Antriebskabel 107 verlässlich an dem Schlitten 103 beziehungsweise der ersten Komponente 105 befestigt.

Mittels der Ausnehmung 110 in der ersten Komponente 105 ist es möglich, eine Durchspritzung zu realisieren, die auf der dem Kabel 107 abgewandten Seite 112 mit dem Haltekopf 111 aus einer Kunststoffanhäufung versehen ist, ähnlich einem Schweißdom. Der Haltekopf 111 hält mittels dem Kunststoff in der Ausnehmung 110 und am Antriebskabel 107 die zweite Komponente 106 so verlässlich an der ersten Komponente 105, dass bei einem Unfall ausreichend Kräfte auf das Antriebskabel 107 übertragbar sind, insbesondere ausreichend für eine EU NCAP. Somit ist die Kopplung 108 des Antriebskabels 107 mit dem Schlitten 103 stabil genug ausgebildet, um auch bei einem Unfall verlässlich zu halten. Somit ist es möglich, das Antriebskabel 107 als Bremse für den Schlitten 103 und damit für das Dachelement 101 zu verwenden.

Figur 6 zeigt die Anordnung 200 gemäß einer weiteren Ausführungsform. Die Ausführungsform der Figur 6 entspricht im Wesentlichen der Ausführungsform, wie im Zusammenhang mit Figur 5 erläutert. Zusätzlich ist ein Halteelement 114 vorgesehen.

Das Halteelement 114 ist beispielsweise ein Blechelement, das mit dem Antriebskabel 107 verbunden ist, sodass das Antriebskabel 107 und das Halteelement 114 relativ zueinander unbeweglich sind. Beispielsweise ist das Halteelement 114 auf das Antriebskabel 107 aufgecrimpt. Das Halteelement 114 erstreckt sich von dem Antriebskabel 107 durch die Ausnehmung 110 bis in den Haltekopf 111 hinein. Das Haltelement 114 weist einen vorspringenden Bereich 115 auf. Der vorspringende Bereich 115 springt auf der Seite 112 über die erste Komponente 105 vor. Somit ist ein Hinterschnitt beziehungsweise ein Hinterhaken des Haltelements 114 mit der ersten Komponente 105 möglich.

Zum Herstellen der Anordnung 200 wird das Halteelement 114 in die Ausnehmung 110 eingefädelt, sodass sie auf der Seite 112 den vorspringenden Bereich 115 ausbildet. Nachfolgend wird das Antriebskabel 107, das Halteelement 114 und die erste Komponente 105 umspritzt, sodass sich die zweite Komponente 106 ausbildet. Das Halteelement 114 ist formschlüssig mit der ersten Komponente 105 verbunden, beispielsweise ähnlich einem Bajonettverschluss. Das Haltelement 114 verklemmt sich mit der ersten Komponente 105, sodass eine verlässliche Verbindung zwischen dem Antriebskabel 107 und der ersten Komponente 105 mittels dem Halteelement 114 realisiert ist.

Das Halteelement 114 weist eine Ausdehnung in X-Richtung auf. Somit trägt das Halteelement 114 dazu bei, dass eine bei einem Unfall auftretende Rotation beziehungsweise Durchbiegung um die Y-Achse des nur einseitig vorne angelenkten Schlittens 103 vermieden wird. Die Rotation beziehungsweise das Durchbiegen des Schlittens 103 kann zu einem Ablösen der zweiten Komponente 106 von der ersten Komponente 105 führen und somit zu einem Ablösen des Antriebskabels 107 von dem Schlitten 103. Dadurch, dass die Rotation beziehungsweise das Durchbiegen vermindert wird, ist das Risiko eines Ablösens der zweiten Komponente 106 von der ersten Komponente 105 verringert. Somit ist die Anbindung des Antriebskabels 107 an den Schlitten 103, insbesondere an die erste Komponente 105, verlässlich ausgebildet. Insbesondere ist es möglich, mittels der Kopplung 108 mit dem Halteelement 114 Kräfte zu übertragen, die ein US NCAP verlangt. Somit ist die Kopplung 108 des Antriebskabels 107 mit dem Schlitten 103 stabil genug ausgebildet, um auch bei einem Unfall verlässlich zu halten. Somit ist es möglich, das Antriebskabel 107 als Bremse für den Schlitten 103 und damit für das Dachelement 101 zu verwenden.

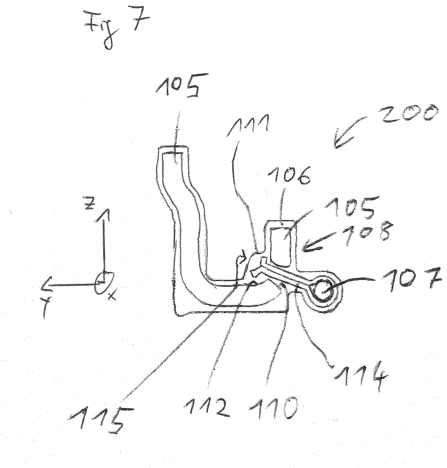

Figur 7 zeigt die Anordnung 200 gemäß einer weiteren Ausführungsform. Die Ausführungsform der Figur 7 entspricht im Wesentlichen der Ausführungsform, wie im Zusammenhang mit Figur 6 erläutert.

Im Unterschied zur Ausführungsform der Figur 6 ist das Halteelement 114 im vorspringenden Bereich 115 abgewinkelt. Im vorspringenden Bereich ist das Halteelement 114 in Bezug auf eine Haupterstreckungsrichtung abgewinkelt, beispielsweise umgebogen. Die Haupterstreckungsrichtung erstreckt sich zwischen dem Antriebskabel 107 und der Ausnehmung 110. Im dargestellten Ausführungsbeispiel weisen die beiden Enden des Blechelements, das das Halteelement 114 bildet, jeweils einen Winkel zur Haupterstreckungsrichtung auf. Gemäß weiteren Ausführungsformen ist nur ein einziges Ende abgewinkelt. Gemäß Ausführungsformen ist das Halteelement 114 im vorspringenden Bereich 115 entlang der x-Richtung vollständig angewinkelt. Gemäß weiteren Ausführungsformen ist das Halteelement 114 im vorspringenden Bereich 115 entlang der x-Richtung nur teilweise angewinkelt.

Durch die umgebogen Enden im vorspringenden Bereich 115 ist das Haltelement 114 verlässlich mit der ersten Komponente 105 verklemmt, sodass eine verlässliche Verbindung zwischen dem Antriebskabel 107 und der ersten Komponente 105 mittels dem Halteelement 114 realisiert ist. Durch die umgebogen Enden im vorspringenden Bereich 115 wird das Haltelement 114 verlässlich von der zweiten Komponente 106 gehalten. Ein Entkoppeln des Halteelements 114 von dem Schlitten 103 beziehungsweise der ersten Komponente 105 wird so vermieden. Die Kopplung 108 des Antriebskabels 107 mit dem Schlitten 103 ist stabil genug ausgebildet, um auch bei einem Unfall verlässlich zu halten.

Gemäß weiteren Ausführungsbeispielen ist eine Kombination des Ausführungsbeispiels wie im Zusammenhang mit Figur 4 erläutert mit den Ausführungsbeispielen wie im Zusammenhang mit den Figuren 5 bis 7 erläutert vorgesehen. Somit ist beispielsweise bei der Kopplung 108 sowohl die Aufrauung 109 als auch die Ausnehmung 110 mit dem Haltekopf 111 vorgesehen. Gemäß weiteren Ausführungsbeispielen weist die Kopplung 108 sowohl die Aufrauung 109 als auch die Ausnehmung 110 und das Halteelement 114 und dem Haltekopf 111 auf.

Die Anordnung 200 ist unabhängig von der Ausgestaltung der Kopplung 108 so ausgebildet, dass sie in der Führungsschiene 104 mit dem Führungskanal 116 geführt werden kann. Der Querschnitt der Führungsschiene 104 beziehungsweise des Führungskanals 116 ist stets gleich, unabhängig davon, ob eine Anordnung 200 gemäß Figur 4, gemäß Figur 5, gemäß Figur 6 oder gemäß Figur 7 verwendet wird. Somit ist das System 300 modular ausgebildet. Im gleichen Bauraum sind unterschiedlich starke Kopplungen 108 ausbildbar, beispielsweise je nach Kundenanforderung. Beispielsweise ist es möglich, das System 300 mit gleichem Bauraum, aber unterschiedlichen Kosten, je nach Kundenanforderung gestaffelt anzubieten. Zudem ist keine Bauraumerweiterung im Vergleich zu herkömmlichen Systemen erforderlich.

## Patentansprüche

1. Anordnung für ein bewegbares Dachelement (101) für ein Kraftfahrzeug (100), aufweisend:
- einen Schlitten (103), der ausgebildet ist, in einer Schiene (104) geführt zu werden und relativ zu der Schiene (104) bewegt zu werden, und der eine erste Komponente (105) und eine zweite Komponente (106) aufweist, und
- ein Antriebskabel (107), wobei die zweite Komponente (106) die erste Komponente (105) und das Antriebskabel (107) zumindest teilweise umgibt, um eine Kopplung (108) zwischen dem Antriebskabel (107) und dem Schlitten (103) auszubilden, **dadurch gekennzeichnet, dass** die Kopplung (108) aufweist:
- eine Ausnehmung (110) der ersten Komponente (105), in der ein Material der zweiten Komponente (106) angeordnet ist, und
- einen Haltekopf (111), der mittels der zweiten Komponente (105) auf einer dem Antriebskabel (107) abgewandten Seite (112) in einem Bereich (113) der Ausnehmung (110) ausgebildet ist, wobei die erste Komponente (105) aus einem Metall gebildet ist und die zweite Komponente (106) aus einem Kunststoff gebildet ist und die Kopplung (108) durch ein Umspritzen des Antriebskabels (107) und der ersten Komponente (105) mit dem Kunststoff ausgebildet ist.

2. Anordnung nach Anspruch 1, bei der die Kopplung (108) weiter aufweist:
- eine Aufrauung (109) der ersten Komponente (105), um eine kraftschlüssige und/oder stoffschlüssige Verbindung zwischen der ersten (105) und der zweiten (106) Komponente auszubilden.

3. Anordnung nach Anspruch 1 oder 2, bei der die Kopplung (108) weiter aufweist:
- eine Halteelement (114), das mit dem Antriebskabel (107) verbunden ist und das sich ausgehend von dem Antriebskabel (107) durch die Ausnehmung (110) erstreckt.

4. Anordnung nach Anspruch 3, bei der das Halteelement (114) einen vorspringenden Bereich (115) aufweist, der auf der dem Antriebskabel (107) abgewandten Seite (112) über die erste Komponente (105) vorspringt.

5. Anordnung nach Anspruch 4, bei der der vorspringende Bereich (115) in den Haltekopf (111) hineinragt.

6. Anordnung nach Anspruch 4 oder 5, bei der das Halteelement (114) in dem vorspringende Bereich (115) abgewinkelt ausgebildet ist.

7. Anordnung nach Anspruch 3 bis 6, bei der das Halteelement (114) mittels einer plastischen Verformung mit dem Antriebskabel (107) verbunden ist.

8. Anordnung nach einem der Ansprüche 3 bis 7, bei der das Halteelement (114) aus einem Metall gebildet ist.

9. System für ein bewegbares Dachelement (101) für ein Kraftfahrzeug (100), aufweisend:
- eine Anordnung (200) nach einem der Ansprüche 1 bis 8,
- die Schiene (104), die einen Führungskanal (116) aufweist, wobei
- der Schlitten (103) einen vorgegebenen Querschnitt aufweist, der so vorgegeben ist, dass der Schlitten (103) in dem Führungskanal (116) führbar ist unabhängig von der Art der Kopplung (108).

## Claims

1. Arrangement for a movable roof element (101) for a motor vehicle (100), having:
- a carriage (103) which is designed to be guided in a rail (104) and to be moved relative to the rail (104) and which has a first component (105) and has a second component (106), and
- a drive cable (107), wherein the second component (106) at least partially surrounds the first component (105) and the drive cable (107) in order to form a coupling (108) between the drive cable (107) and the carriage (103) ,
**characterized in that** the coupling (108) has:
- a recess (110) of the first component (105), in which a material of the second component (106) is arranged, and
- a retaining head (111) which, by means of the second component (105), is formed on a side (112) facing away from the drive cable (107) in a region (113) of the recess (110), wherein the first component (105) is formed from a metal, and the second component (106) is formed from a plastic, and the coupling (108) is formed by encapsulation of the drive cable (107) and the first component (105) with the plastic by injection moulding.

2. Arrangement according to Claim 1, in which the coupling (108) furthermore has:
- a roughening (109) of the first component (105) in order to form a force-fitting and/or materially bonded connection between the first (105) and the second (106) component.

3. Arrangement according to Claim 1 or 2, in which the coupling (108) furthermore has:
- a retaining element (114) which is connected to the drive cable (107) and which, proceeding from the drive cable (107), extends through the recess (110).

4. Arrangement according to Claim 3, in which the retaining element (114) has a projecting region (115) which projects over the first component (105) on the side (112) facing away from the drive cable (107).

5. Arrangement according to Claim 4, in which the projecting region (115) projects into the retaining head (111) .

6. Arrangement according to Claim 4 or 5, in which the retaining element (114) is of angled form in the projecting region (115).

7. Arrangement according to Claim 3 to 6, in which the retaining element (114) is connected to the drive cable (107) by means of a plastic deformation.

8. Arrangement according to one of Claims 3 to 7, in which the retaining element (114) is formed from a metal.

9. System for a movable roof element (101) for a motor vehicle (100), having
- an arrangement (200) according to one of Claims 1 to 8,
- the rail (104), which has a guide channel (116), wherein
- the carriage (103) has a predefined cross section which is predefined such that the carriage (103) is able to be guided in the guide channel (116) independently of the type of coupling (108).

## Revendications

1. Agencement destiné à un élément de toit mobile (101) pour un véhicule automobile (100), présentant :
- un chariot (103) qui est réalisé pour être guidé sur un rail (104) et être déplacé par rapport au rail (104), et qui présente un premier composant (105) et un deuxième composant (106), et
- un câble d'entraînement (107), le deuxième composant (106) entourant au moins en partie le premier composant (105) et le câble d'entraînement (107) afin de réaliser un couplage (108) entre le câble d'entraînement (107) et le chariot (103),
**caractérisé en ce que** le couplage (108) présente :
- un évidement (110) du premier composant (105) dans lequel est disposé un matériau du deuxième composant (106), et
- une tête de maintien (111) qui est réalisée au moyen du deuxième composant (105) sur un côté (112) détourné du câble d'entraînement (107) dans une zone (113) de l'évidement (110), le premier composant (105) étant formé d'un métal et le deuxième composant (106) étant formé d'une matière plastique, et le couplage étant réalisé par un surmoulage du câble d'entraînement (107) et du premier composant (105) avec la matière plastique.

2. Agencement selon la revendication 1, dans lequel le couplage (108) présente en outre :
- une rugosité (109) du premier composant (105) pour réaliser un assemblage par adhérence et/ou par liaison de matière entre le premier (105) et le deuxième (106) composant.

3. Agencement selon la revendication 1 ou 2, le couplage (108) présentant en outre :
- un élément de maintien (114) qui est relié au câble d'entraînement (107) et qui s'étend à travers l'évidement (110) en partant du câble entraînement (107) .

4. Agencement selon la revendication 3, dans lequel l'élément de maintien (114) présente une zone en saillie (115) qui dépasse du premier composant (105) sur le côté (112) détourné du câble d'entraînement (107) .

5. Agencement selon la revendication 4, dans lequel la zone en saillie (115) fait saillie dans la tête de maintien (111).

6. Agencement selon la revendication 4 ou 5, dans lequel l'élément de maintien (114) est réalisé de manière coudée dans la zone en saillie (115).

7. Agencement selon les revendications 3 à 6, dans lequel l'élément de maintien (114) est relié au câble d'entraînement (107) au moyen d'une déformation plastique.

8. Agencement selon l'une quelconque des revendications 3 à 7, dans lequel l'élément de maintien (114) est formé d'un métal.

9. Système destiné à un élément de toit mobile (101) pour un véhicule automobile (100), présentant :
- un agencement (200) selon l'une quelconque des revendications 1 à 8,
- le rail (104) qui présente un canal de guidage (116), dans lequel
- le chariot (103) présente une section transversale prédéfinie qui est prédéfinie de telle sorte que le chariot (103) peut être guidé dans le canal de guidage (116) indépendamment du type du couplage (108).
